# EUROPEAN PATENT SPECIFICATION

(11) **EP 4 026 857 B1**
(45) Date of publication and mention of the grant of the patent: **04.06.2025**
(21) Application number: 20860584.0
(22) Date of filing: 09.07.2020
(51) Int. Cl.: C08F 18/16, C08F 263/06, C09D 131/06, C08F 2/44, C09D 11/101, C09D 11/106, C09D 7/65, C08F 2/50, C08F 118/16, C08L 25/08, C09D 11/037, C09D 151/00, C09D 11/107

(54) **PHOTOCURABLE RESIN COMPOSITION, INK AND PAINT**
LICHTHÄRTBARE HARZZUSAMMENSETZUNG, TINTE UND LACK
COMPOSITION DE RÉSINE PHOTODURCISSABLE, ENCRE ET PEINTURE

(30) Priority: 02.09.2019 JP 2019159282
(43) Date of publication of application: 13.07.2022
(73) Proprietor: Osaka Soda Co., Ltd., Osaka-shi Osaka 550-0011 (JP)
(72) Inventor: NAGAI, Yosuke, Osaka-shi, Osaka 550-0011 (JP); INOUE, Satoshi, Osaka-shi, Osaka 550-0011 (JP)
(74) Representative: Vossius & Partner Patentanwälte Rechtsanwälte mbB
(86) International application number: PCT/JP2020/026872
(87) International publication number: WO 2021/044729

(56) References cited:
- EP-A1- 3 211 015
- EP-A1- 3 438 190
- WO-A1-2016/125661
- WO-A1-2016/125663
- WO-A1-2017/170388
- JP-A- 2015 143 288
- JP-A- 2018 154 724

## Description

### TECHNICAL FIELD

The present invention relates to a photocurable resin composition containing an allylic polymer (A), a flowability-improving resin (B) and an ethylenically unsaturated compound (C), as well as an ink and a coating material containing the resin composition. More specifically, the present invention relates to a photocurable resin composition which has excellent flowability as an ink or coating material.

### BACKGROUND ART

Various resin compositions which can be cured } light (e.g., ultraviolet rays) have been used in inks, coating materials, adhesives, photoresists, and other applications. For example, UV curable printing inks are highly valued because, e.g., they have a high cure rate so that they can be cured in a short time; they are environmentally friendly due to no use of solvents; and they can save resources and energy. Therefore, they are increasingly widely used in practice.

Among such resin compositions, those containing diallyl phthalate resins derived from diallyl phthalates (diallyl orthophthalate, diallyl isophthalate, diallyl terephthalate) are used as UV offset inks for paper.

However, in offset ink applications, the incorporation of diallyl phthalate resins is known to lead to insufficient adhesion to plastic substrates (see, for example, Patent Literature 1). As products of various types of plastic materials, including polyethylene terephthalate (PET) and polypropylene (PP), have been marketed in recent years, there is a need to improve adhesion to plastic substrates with which diallyl phthalate resins have problems.

In view of the above situation, the Applicant has developed a photocurable resin composition having excellent adhesion to plastic substrates (Patent Literature 2).

### CITATION LIST

### PATENT LITERATURE

Patent Literature 1: JP S52-4310 A
Patent Literature 2: WO 2016/125661 A1

### SUMMARY OF INVENTION

### TECHNICAL PROBLEM

However, the problem is that some combinations of resin components and pigments may result in insufficient flowability during printing. The present invention aims to provide a photocurable resin composition that can constitute a composition having good flowability during printing.

### SOLUTION TO PROBLEM

As a result of extensive studies, the present inventors found out that when a photocurable resin composition contains an allylic polymer (A) produced by polymerization of an allyl compound having a specific structure, a flowability-improving resin (B) and an ethylenically unsaturated compound (C), it has excellent adhesion to plastic substrates and can constitute a composition having good flowability during printing. The inventors thus arrived at the present invention.

Specifically, the photocurable resin composition of the present invention contains an allylic polymer (A), a flowability-improving resin (B), and an ethylenically unsaturated compound (C), the allylic polymer (A) being produced by polymerization of an allylic compound represented by the following formula (I): 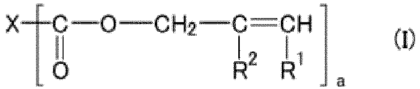 wherein R¹ and R² each represent H or CH₃, X represents an a-valent group having an unsubstituted saturated or partially unsaturated 4- to 8-membered cyclic backbone, and a represents 2 or 3; the flowability-improving resin (B) being a styrene-based resin having monomer units based on styrene, a maleic acid-based resin having monomer units based on maleic acid or a resin having both monomer units based on styrene and monomer units based on maleic acid.

When a photocurable resin composition contains an allylic polymer (A) produced by polymerization of an allylic compound of formula (I), a flowability-improving resin (B), and an ethylenically unsaturated compound (C), it has excellent adhesion to synthetic polymer substrates, particularly plastic substrates, and also has excellent flowability during printing.

Moreover, the composition containing the allylic polymer (A), the flowability-improving resin (B) and an ethylenically unsaturated compound (C), can constitute a composition having good compatibility when combined with other resin components.

In the photocurable resin composition of the present invention, X in formula (I) preferably has any of the following cyclic backbones:

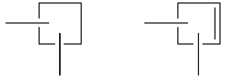

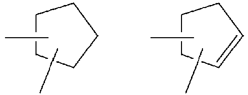

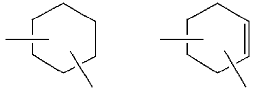

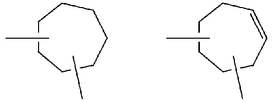

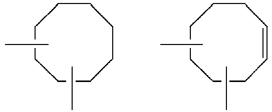

The photocurable resin composition of the present invention further contains an ethylenically unsaturated compound (C).

The ethylenically unsaturated compound (C) is suitable for providing a composition having good compatibility because it has good compatibility with the allylic polymer (A) and the flowability-improving resin (B).

The photocurable resin composition of the present invention preferably further contains a photopolymerization initiator.

The composition containing the photopolymerization initiator can undergo smooth polymerization by exposure to light, so that a higher molecular weight polymer can be produced in a short time.

The ink or coating material of the present invention contains the photocurable resin composition of the present invention.

The ink or coating material has excellent flowability.

The ink is also suitable as an ink for printing on plastic substrates, particularly on PP resin substrates such as sheets or films.

The coating material is also suitable as a coating material for painting on plastic substrates, particularly on PP resin substrates such as sheets or films.

The coating material of the present invention is also preferably an overprint varnish.

### ADVANTAGEOUS EFFECTS OF INVENTION

The present invention provides a photocurable resin composition having excellent flowability during printing when used as a component of an ink, a coating material, an adhesive, or a photoresist. The present invention also provides a photocurable resin composition further having excellent compatibility with an ethylenically unsaturated compound (C).

### DESCRIPTION OF EMBODIMENTS

The present invention will be described in detail below.

### Allylic polymer (A)

The photocurable resin composition of the present invention contains an allylic polymer (A) produced by polymerization of an allylic compound represented by the following formula (I): 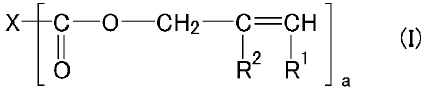 wherein R¹ and R² each represent H or CH₃; X represents an a-valent group having an unsubstituted saturated or partially unsaturated 4- to 8-membered cyclic backbone; and a represents 2 or 3.

Preferred examples of X in formula (I) include those having the following cyclic backbones:

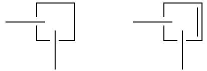

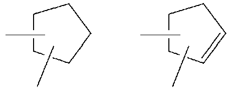

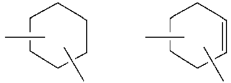

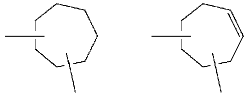

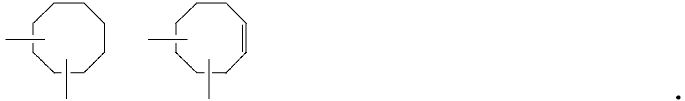

More preferred examples of X in formula (I) include those having the following cyclic backbones:

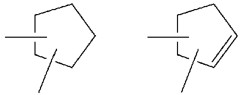

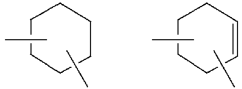

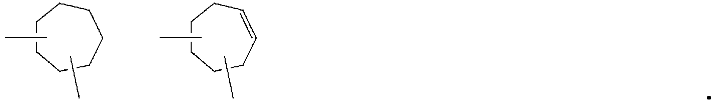

Even more preferred examples of X in formula (I) include those having the following cyclic backbones:

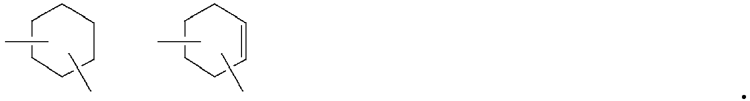

X may be of various types and may have a cyclic backbone other than those mentioned above. When X has a partially unsaturated cyclic backbone, the number of double bonds in the cyclic backbone is not limited to one and may be two or more. However, X does not have an aromatic six-membered cyclic backbone.

X may be intramolecularly crosslinked. Examples of the intramolecularly crosslinked X include adamantane, norbornene, and norbornane.

Since X is an a-valent group where a is 2 or 3, X is a bivalent or trivalent group. A number a (2 or 3) of allyl ester groups [-CO-O-CH₂-CR²=CHR¹] shown in formula (I) are bound to the cyclic backbone of X.

Any combination of positions on the ring of X substituted by allyl ester groups [-CO-O-CH₂-CR²=CHR¹] may be used. The allylic compound may be a mixture of materials that differ in the combination of substitution positions. Particularly when two allyl ester groups are bound to a six-membered ring X, the two allyl ester groups may be in the ortho, meta, or para orientation, preferably in the ortho or para orientation, more preferably in the ortho orientation.

Specific examples of the allylic compound of formula (I) include diallyl 1,2-cyclohexanedicarboxylate, diallyl 1,3-cyclohexanedicarboxylate, diallyl 1,4-cyclohexanedicarboxylate, diallyl 4-cyclohexene-1,2-dicarboxylate, and diallyl 2-cyclohexene-1,2-dicarboxylate. Preferred among these are diallyl 1,2-cyclohexanedicarboxylate, diallyl 4-cyclohexene-1,2-dicarboxylate, and diallyl 1,4-cyclohexanedicarboxylate, with diallyl 1,2-cyclohexanedicarboxylate being more preferred.

An allylic polymer (A) produced by polymerization of at least one selected from the group consisting of the aforementioned allylic compounds may be used in the photocurable resin composition. Moreover, those produced by copolymerization of the allylic compound of formula (I) and other polymerizable compounds may be used in the photocurable resin composition. Examples of such copolymerizable compounds include 3-methyl-hexahydro-1,2-diallyl phthalate, 4-methyl-hexahydro-1,2-diallyl phthalate, 3-methyl-1,2,3,6-tetrahydro-1,2-diallyl phthalate, and 4-methyl-1,2,3,6-tetrahydro-1,2-diallyl phthalate.

The specific exemplary allylic compounds of formula (I) may be produced, for example, by an esterification reaction between cyclohexanedicarboxylic acid or cyclohexanedicarboxylic anhydride and allyl alcohol or allyl chloride, or an esterification reaction between cyclohexenedicarboxylic acid or cyclohexenedicarboxylic anhydride and allyl alcohol or allyl chloride.

Commercial products of the specific exemplary allylic compounds of formula (I) may also be used.

The allylic compound of formula (I) may be polymerized by any method, including usual polymerization reactions. An appropriate polymerization initiator, if needed, may be added in such a polymerization reaction. The use of the polymerization initiator allows for production of a higher molecular weight polymer in a short time.

Examples of polymerization initiators that may be used in the polymerization reaction of the allylic compound include azo initiators such as azobisisobutyronitrile and dimethyl 2,2'-azobisisobutyrate; peroxide initiators such as ketone peroxides, peroxy ketals, hydroperoxides, dialkyl peroxides, diacyl peroxides, peroxy dicarbonates, peroxy esters, and benzoyl peroxide; and photopolymerization initiators, including: acetophenone initiators such as 2-methyl-1-[4-(methylthio)phenyl]-2-morpholinopropan-1-one and 1-hydroxycyclohexyl phenyl ketone; benzoin initiators such as benzoin and benzoin ethyl ether; benzophenone initiators such as benzophenone; phosphorus initiators such as acylphosphine oxide; sulfur initiators such as thioxanthone; and benzil initiators such as benzil and 9,10-phenanthrenequinone.

The amount of polymerization initiators per 100 parts by weight of the allylic compound of formula (I) as monomer is preferably 5.0 parts by weight or less, more preferably 3.0 parts by weight or less. Moreover, the amount is particularly preferably 0.001 to 3.0 parts by weight.

The reaction temperature during the polymerization is preferably 60 to 240°C, e.g., 80 to 220°C. The reaction time is preferably 0.1 to 100 hours, e.g., 1 to 30 hours.

An allylic polymer (A) having monomer units based on the allylic compound of formula (I) may be prepared by polymerizing the allylic compound of formula (I) as described above or by other methods.

The amount of monomer units based on the allylic compound of formula (I), based on 100% by weight of the allylic polymer (A), is preferably 20% by weight or more, more preferably 50% by weight or more, even more preferably 80% by weight or more, particularly preferably 98% by weight or more, and may be 100% by weight.

The allylic polymer (A) preferably has a weight average molecular weight of 300,000 or less, more preferably 200,000 or less. Moreover, the weight average molecular weight is even more preferably 2,000 to 150,000, particularly preferably 5,000 to 140,000.

The amount of the allylic polymer (A) in the photocurable resin composition of the present invention is preferably 1% to 60% by weight, more preferably 1% to 55% by weight, even more preferably 1% to 50% by weight of the total amount of the photocurable resin composition. The lower limit of the amount is particularly preferably 5% by weight, most preferably 10% by weight, even most preferably 15% by weight, further most preferably 20% by weight, particularly most preferably 30% by weight. When the amount is in the range indicated above, the allylic polymer (A) can be maintained sufficiently soluble in the composition even with a styrene maleic acid resin (B) or an ethylenically unsaturated compound (C), which will be described later, to provide a composition having excellent compatibility. In addition, the resulting photocurable resin composition can have better flowability.

### Flowability-improving resin (B)

The flowability-improving resin (B) usable in the photocurable resin composition of the present invention is a styrene-based resin having monomer units based on styrene or a maleic acid-based resin having monomer units based on maleic acid or a resin having both monomer units based on styrene and monomer units based on maleic acid. Examples of the styrene-based resin include polystyrene resins, acrylonitrile-styrene copolymers (AS resins), acrylonitrile-butadiene-styrene copolymers (ABS resins), acrylonitrile-acrylic rubber-styrene copolymers (AAS resins), acrylonitrile-styrene-acrylic rubber copolymers (ASA resins), acrylonitrile-ethylene/propylene rubber-styrene copolymers (AES resins), and styrene-acrylic copolymers. Examples of the maleic acid-based resin include maleic acid resins. Examples of those having both monomer units based on styrene and monomer units based on maleic acid include styrene-maleic acid resins and styrene-acrylic-maleic acid resins. Preferred among these are polystyrene resins, maleic acid resins, and styrene maleic acid resins, with styrene maleic acid resins being more preferred.

Moreover, when the flowability-improving resin (B) is a copolymer, the ratio between the components constituting the polymer may be any selected ratio. The Component (1):Component (2) ratio may be in the range of 1:99 to 99:1. For example, when the flowability-improving resin (B) is a styrene-maleic acid resin, it may be appropriately selected from those polymerized at a styrene:maleic acid ratio in the range of 1:10 to 10:1. Here, the ratio is on a mole basis.

: For example, the flowability-improving resin (B) may have a weight average molecular weight in the range of about 2,000 to 50,000. The flowability-improving resin (B) may have an acid value in the range of 100 to 500.

The amount of the flowability-improving resin (B) in the photocurable resin composition is : 1 to 25 parts by weight, per 100 parts by weight of the allylic polymer (A) of the photocurable resin composition. When the amount of the flowability-improving resin (B) is relatively small compared with the allylic polymer (A) of the photocurable resin composition, the resulting photocurable resin composition can have better flowability. The amount of the flowability-improving resin (B) in the photocurable resin composition may also be in the range of 0.1% to 15% by weight, preferably 0.1% to 12% by weight, more preferably 0.1% to 11% by weight, even more preferably 0.1% to 9% by weight. When the amount is in the range indicated above, sufficient adhesion to plastic substrates can be provided, and the allylic polymer (A) and the flowability-improving resin (B) can be maintained sufficiently soluble to provide a composition having excellent compatibility. Further, they can be maintained sufficiently soluble in the composition even with an ethylenically unsaturated compound (C). In addition, the resulting photocurable resin composition can have better flowability.

### Ethylenically unsaturated compound (C)

The photocurable resin composition of the present invention further contains an ethylenically unsaturated compound (C) which is curable by exposure to light. The ethylenically unsaturated compound (C) preferably has 1 to 20, more preferably 1 to 10, even more preferably 2 to 6 carbon-carbon double bonds. The ethylenically unsaturated compound (C) may be, for example, a (meth)acrylic acid ester compound, a (meth)allyl compound, or a vinyl compound. The ethylenically unsaturated compound may also be a mixture of two or more compounds.

Examples of the (meth)acrylic acid ester compound include (meth)acrylic acid ester compounds of alcohols such as pentaerythritol, dipentaerythritol, trimethylolpropane, ditrimethylolpropane, neopentyl glycol, 1,6-hexanediol, glycerol, polyethylene glycol, and polypropylene glycol, and alkylene oxide (e.g., ethylene oxide or propylene oxide) adducts of the foregoing (meth)acrylic acid ester compounds; (meth)acrylic acid ester compounds of alkylene oxide (e.g., ethylene oxide or propylene oxide) adducts of bisphenols such as bisphenol A and bisphenol F; (meth)acrylic acid ester compounds such as epoxy (meth)acrylates, urethane (meth)acrylates, and alkyd (meth)acrylates; and (meth)acrylic acid ester compounds such as epoxidized soybean oil acrylate. Preferred are (meth)acrylic acid ester compounds of alcohols such as pentaerythritol, dipentaerythritol, trimethylolpropane, ditrimethylolpropane, neopentyl glycol, 1,6-hexanediol, glycerol, polyethylene glycol, and polypropylene glycol, and alkylene oxide (e.g., ethylene oxide or propylene oxide) adducts of the foregoing (meth)acrylic acid ester compounds. More preferred are (meth)acrylic acid ester compounds of alcohols such as pentaerythritol, dipentaerythritol, trimethylolpropane, and ditrimethylolpropane, and alkylene oxide (e.g., ethylene oxide or propylene oxide) adducts of the foregoing (meth)acrylic acid ester compounds.

Examples of the (meth)allyl compound include di(meth)allyl phthalates and tri(meth)allyl isocyanurates.

Examples of the vinyl compound include styrene, divinylbenzene, N-vinylpyrrolidone, and vinyl acetate.

In particular, in view of compatibility with the allylic polymer (A) and curability in photo-curing, ditrimethylolpropane tetraacrylate or trimethylolpropane triacrylate is preferred, with ditrimethylolpropane tetraacrylate being more preferred.

The amount of the ethylenically unsaturated compound (C) in the photocurable resin composition of the present invention is preferably 50 to 1000 parts by weight, more preferably 100 to 950 parts by weight, even more preferably 100 to 750 parts by weight, per 100 parts by weight of the allylic polymer (A) in the photocurable resin composition. The upper limit of the amount is particularly preferably 600 parts by weight, most preferably 550 parts by weight, even most preferably 500 parts by weight, further most preferably 400 parts by weight, particularly most preferably 300 parts by weight. When the amount is in the range indicated above, the resulting photocurable resin composition can have better flowability.

Moreover, the ethylenically unsaturated compound (C) in the photocurable resin composition is preferably added in such an amount that the photocurable resin composition has a viscosity in the range of 100 to 300 Pa·s (25°C). Specifically, the ratio between the flowability-improving resin (B) and the ethylenically unsaturated compound (C) added to the photocurable resin composition is preferably in the range of flowability-improving resin
(B):ethylenically unsaturated compound (C) = 1:99 to 70:30, more preferably 1:99 to 60:40.

### Other additives

The photocurable resin composition of the present invention may contain a polymerization initiator, particularly preferably a photopolymerization initiator. Examples of the photopolymerization initiator in the photocurable resin composition include acetophenone initiators such as 2-methyl-1-[4-(methylthio)phenyl]-2-morpholinopropane-1 and 1-hydroxycyclohexyl phenyl ketone; benzoin initiators such as benzoin and benzoin ethyl ether; benzophenone initiators such as benzophenone; phosphorus initiators such as acylphosphine oxide; sulfur initiators such as thioxanthone; and dibenzil initiators such as benzil and 9,10-phenanthrenequinone.

The amount of the photopolymerization initiator in the photocurable resin composition is preferably in the range of 0.1 to 15% by weight, more preferably 0.5 to 12% by weight, even more preferably 1 to 10% by weight of the total photocurable resin composition.

A photoinitiator aid (e.g., an amine photoinitiator aid such as triethanolamine) may be used together in the photocurable resin composition.

The amount of the photoinitiator aid is preferably in the range of 0.1 to 5% by weight, more preferably 0.5 to 3% by weight of the total photocurable resin composition.

The photocurable resin composition of the present invention may contain various additives depending on the purpose, examples of which include stabilizers such as polymerization inhibitors (e.g. hydroquinone, methoquinone), coloring agents such as pigments (e.g. cyanine blue, disazo yellow, carmine 6b, lake red C, carbon black, titanium white), fillers, and viscosity modifiers. The amount of the stabilizer in the photocurable resin composition is preferably in the range of 0.01 to 2% by weight, more preferably 0.1 to 1% by weight of the total photocurable resin composition.

The amount of the coloring agent is preferably in the range of 1 to 50% by weight, more preferably 1 to 45% by weight of the total photocurable resin composition.

The photocurable resin composition of the present invention may be prepared by mixing an allylic polymer (A) with a flowability-improving resin (B) and with an ethylenically unsaturated compound (C) as well as optionally a photopolymerization initiator, a photoinitiator aid, and additives (e.g., a stabilizer, a pigment). The photocurable resin composition of the present invention is curable by exposure to light. The light used for curing is typically ultraviolet rays.

The curing reaction of the photocurable resin composition may be performed using any curing apparatus under any curing conditions, and any conventional method may be used to perform a photocuring reaction.

The photocurable resin composition of the present invention can be used in any application. It can be used in various technical fields, such as inks (e.g., printing inks such as photocurable lithographic inks, silk screen inks, and gravure inks), coating materials (e.g., coating materials for paper, plastics, metals, wood, or other substrates, such as overprint varnishes), adhesives, and photoresists.

The ink of the present invention encompasses any ink that contains the photocurable resin composition of the present invention. The coating material of the present invention encompasses any coating material that contains the photocurable resin composition of the present invention. Moreover, the coating material of the present invention is preferably an overprint varnish.

For example, the ink may typically be prepared as follows. An allylic polymer (A), a flowability-improving resin (B), and additives such as a stabilizer may be dissolved in an ethylenically unsaturated compound (C) with stirring at 60°C to 100°C to prepare a varnish, which may then be combined with a pigment, a photopolymerization initiator, and other additives with stirring in a butterfly mixer, followed by milling using, for example, a three-roll mill to obtain an ink.

The overprint varnish may also be prepared by the same procedure as described for the ink but using no pigment.

### EXAMPLES

The present invention is described in greater detail below referring to, but not limited to, examples.

### Determination of weight average molecular weight (Mw) and molecular weight distribution (Mw/Mn) of allylic polymer

The weight average molecular weight (Mw) and the molecular weight distribution (Mw/Mn) were determined by GPC. Mw and Mn refer to weight and number average molecular weights, respectively, relative to polystyrene standards.
Column: two Shodex LF-804 columns connected in series
Flow rate: 1.0 mL/min
Temperature: 40°C
Detector: RID-20A
Samples: measurement samples prepared by dissolving 20 mg of each sample in 10 mL of tetrahydrofuran

### Production Example 1: Synthesis of Polymer 1

Diallyl 1,2-cyclohexanedicarboxylate was produced by an esterification reaction between cyclohexanedicarboxylic anhydride and allyl alcohol.

To a 3 L separable flask were added 2400 g of diallyl 1,2-cyclohexanedicarboxylate and 60 g of benzoyl peroxide, followed by heating at 80°C with stirring. After 2.5 hours of reaction, the reaction mixture was cooled to 30°C. After the cooling, methanol was added to the flask to precipitate a polymer. The polymer was dried under reduced pressure at 40°C for 16 hours (weight recovered: 408 g, yield: 17%, Mw = 32,000, Mw/Mn = 2.8). The resulting polymer was used as Polymer 1 (diallyl 1,2-cyclohexanedicarboxylate polymer).

### 1) Preparation of photocurable resin composition

Photocurable resin compositions having the formulations shown in Table 1 below were prepared. The characteristics of the photocurable resin compositions were evaluated.

**[Table 1]**

| | | Composition 1 | Composition 2 | Composition 3 |
|---|---|---|---|---|
| Allylic polymer (A) | Polymer 1 *1 | 44 | 40 | 45 |
| Flowability-improving resin (B) | SMA EF80*2 | 1 | 5 | |
| Ethylenically unsaturated compound (C) | DTMPTA*3 | 55 | 55 | 55 |
| Polymerization inhibitor | MHQ*4 | 0.1 | 0.1 | 0.1 |

| | | | | |
|---|---|---|---|---|
| The numerals in the table indicate parts by weight. *1: Polymer 1 obtained in Production Example 1 *2: Flowability-improving resin (B): SMA EF80 available from TOTAL Cray Valley, styrene maleic acid resin *3: DTMPTA: SR355 available from Sartomer, ditrimethylolpropane tetraacrylate *4: MHQ: Methylhydroquinone available from FUJIFILM Wako Pure Chemical Corporation | | | | |

The allylic polymer (A) obtained in Production Example 1, the flowability-improving resin (B), the ethylenically unsaturated compound (C), and the polymerization inhibitor were added in the formulation amounts shown in Table 1, and mixed with heating to 100°C to prepare a photocurable resin composition.

### 2) Preparation of ink

Compositions 1 to 3 prepared in 1) were milled with the components in the formulation amounts shown in Table 2 in a three-roll mill to obtain inks. The characteristics of the inks were evaluated. Here, Compositions 1, 2, and 3 were used in Example 1, Example 2, and Comparative Example 1, respectively.

**[Table 2]**

| | | Example 1 | Example 2 | Comparative Example 1 |
|---|---|---|---|---|
| Pigment | Titanium oxide *1 | 50 | 50 | 50 |
| Composition | *2 | 34.4 | 34.4 | 34.4 |
| Acrylate | DTMPTA *3 | 8.6 | 8.6 | 8.6 |
| Wax | Polyethylene wax *4 | 2 | 2 | 2 |
| Photopolymerization initiator | *5 | 5 | 5 | 5 |

| | | | | |
|---|---|---|---|---|
| The numerals in the table indicate parts by weight. *1: Titanium oxide 1: CR-50 available from Ishihara Sangyo Kaisha, Ltd. *2: Each of Compositions 1 to 3 prepared in 1) was used. *3: DTMPTA: SR355 available from Sartomer, ditrimethylolpropane tetraacrylate *4: Polyethylene wax: S-394 available from Shamrock Technologies *5: Omnirad 907: 2-methyl-1-[4-(methylthio)phenyl]-2-morpholinopropan-1-one available from IGM Resins B.V. | | | | |

### 3) Viscosity measurement

The viscosity (Pa·s) at 25°C of the compositions was measured using BROOKFIELD VISCOMETER DV-II+Pro. Table 3 shows the results.

### 4) Flowability test

A volume of 0.5 ml of each of the inks prepared in 2) was dropped onto a plate tilted at an angle of 60°. The distance the ink flowed was determined after 10 minutes. Table 3 shows the results.

**[Table 3]**

| | | Example 1 | Example 2 | Comparative Example 1 |
|---|---|---|---|---|
| Varnish viscosity (Pa·s) | | 170 | 180 | 200 |
| Ink flow (mm) | Before emulsification | 100 | 100 | 110 |
| | After emulsification | 100 | 100 | 90 |

As can be seen from comparison of Examples 1 and 2 with Comparative Example 1, a reduction in flowability after emulsification is prevented by incorporating the flowability-improving resin (B) into Polymer 1, which is an allylic polymer (A) produced by polymerization of an allylic compound of formula (I). In contrast, it can be seen that incorporating no flowability-improving resin (B) results in deteriorated flowability after emulsification.

### INDUSTRIAL APPLICABILITY

The photocurable resin composition of the present invention can be used in inks (e.g., offset inks), coating materials, adhesives, photoresists, and other applications for plastic substrates.

## Claims

1. A photocurable resin composition, comprising:
an allylic polymer (A);
a flowability-improving resin (B), and
an ethylenically unsaturated compound (C);
the allylic polymer (A) being produced by polymerization of an allylic compound represented by the following formula (I): 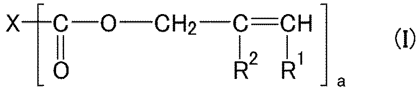
wherein R¹ and R² each represent H or CH₃; X represents an a-valent group having an unsubstituted saturated or partially unsaturated 4- to 8-membered cyclic backbone; and a represents 2 or 3;
the flowability-improving resin (B) being a styrene-based resin having monomer units based on styrene, a maleic acid-based resin having monomer units based on maleic acid or a resin having both monomer units based on styrene and monomer units based on maleic acid;
wherein the amount of the flowability-improving resin (B) in the photocurable resin composition is 1 to 25 parts by weight per 100 parts by weight of the allylic polymer (A) of the photocurable resin composition.

2. The photocurable resin composition according to claim 1,
wherein the flowability-improving resin (B) is a polystyrene resin, a maleic acid resin, or a styrene maleic acid resin.

3. The photocurable resin composition according to claim 1 or 2,
wherein X in formula (I) has any of the following cyclic backbones:

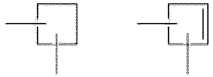

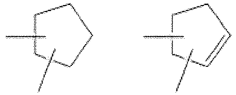

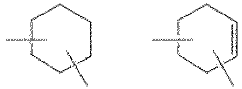

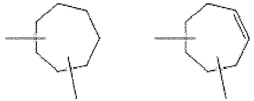

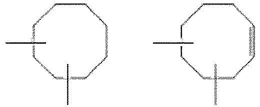

4. The photocurable resin composition according to any one of claims 1 to 3, further comprising a photopolymerization initiator.

5. An ink, comprising the photocurable resin composition according to any one of claims 1 to 4.

6. A coating material, comprising the photocurable resin composition according to any one of claims 1 to 4.

7. The coating material according to claim 6, which is an overprint varnish.

## Patentansprüche

1. Eine lichthärtbare Harzzusammensetzung, umfassend:
ein allylisches Polymer (A);
ein die Fließfähigkeit verbesserndes Harz (B) und
eine ethylenisch ungesättigte Verbindung (C);
wobei das allylische Polymer (A) durch Polymerisation einer allylischen Verbindung, dargestellt durch die nachstehende Formel (I), hergestellt wird: 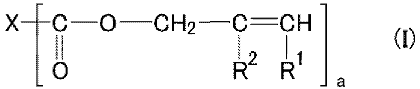
wobei R¹ und R² jeweils H oder CH₃ darstellen; X eine a-wertige Gruppe mit einem unsubstituierten gesättigten oder teilweise ungesättigten 4- bis 8-gliedrigen cyclischen Gerüst darstellt; und a 2 oder 3 darstellt;
das die Fließfähigkeit verbessernde Harz B ein Harz auf Styrolbasis mit Monomereinheiten auf Styrolbasis, ein Harz auf Maleinsäurebasis mit Monomereinheiten auf Maleinsäurebasis, oder ein Harz, welches sowohl Monomereinheiten auf Styrolbasis als auch Monomereinheiten auf Maleinsäurebasis aufweist, ist;
wobei die Menge des die Fließfähigkeit verbessernden Harzes (B) in der lichthärtbaren Harzzusammensetzung 1 bis 25 Gewichtsteile pro 100 Gewichtsteile des allylischen Polymers (A) der lichthärtbaren Harzzusammensetzung beträgt.

2. Die lichthärtbare Harzzusammensetzung gemäß Anspruch 1,
wobei das die Fließfähigkeit verbessernde Harz (B) ein Polystyrolharz, ein Maleinsäureharz oder ein Styrol-Maleinsäureharz ist.

3. Die lichthärtbare Harzzusammensetzung gemäß Anspruch 1 oder 2,
wobei X in Formel (I) eines der nachstehenden cyclischen Gerüste aufweist:

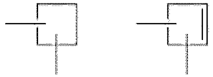

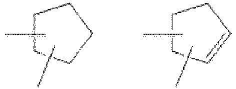

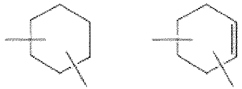

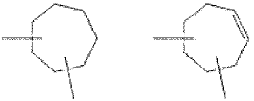

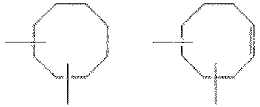

4. Die lichthärtbare Harzzusammensetzung gemäß einem der Ansprüche 1 bis 3, ferner umfassend einen Photopolymerisationsinitiator.

5. Eine Druckfarbe, umfassend die lichthärtbare Harzzusammensetzung gemäß einem der Ansprüche 1 bis 4.

6. Ein Beschichtungsmaterial, umfassend die lichthärtbare Harzzusammensetzung gemäß einem der Ansprüche 1 bis 4.

7. Das Beschichtungsmaterial gemäß Anspruch 6, wobei es sich um einen Überdrucklack handelt.

## Revendications

1. Composition de résine photodurcissable, comprenant :
un polymère allylique (A) ;
une résine améliorant la coulabilité (B), et
un composé à insaturation éthylénique (C) ;
le polymère allylique (A) étant produit par polymérisation d'un composé allylique représenté par la formule (I) suivante : 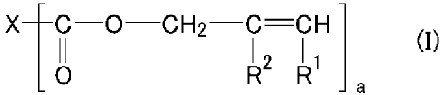
dans laquelle chacun de R¹ et R² représente H ou CH₃ ; X représente un groupe de valence a ayant un squelette cyclique à 4 à 8 chaînons non substitué saturé ou partiellement insaturé ; et a représente 2 ou 3 ;
la résine améliorant la coulabilité (B) étant une résine à base de styrène ayant des motifs monomères à base de styrène, une résine à base d'acide maléique ayant des motifs monomères à base d'acide maléique, ou une résine ayant à la fois des motifs monomères à base de styrène et des motifs monomères à base d'acide maléique ;
dans laquelle la quantité de la résine améliorant la coulabilité (B) dans la composition de résine photodurcissable est de 1 à 25 parties en poids pour 100 parties en poids du polymère allylique (A) de la composition de résine photodurcissable.

2. Composition de résine photodurcissable selon la revendication 1, dans laquelle la résine améliorant la coulabilité (B) est une résine de polystyrène, une résine d'acide maléique, ou une résine de styrène-acide maléique.

3. Composition de résine photodurcissable selon la revendication 1 ou 2, dans laquelle X dans la formule (I) a l'un quelconque des squelettes cycliques suivants :

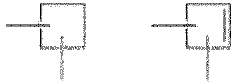

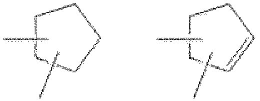

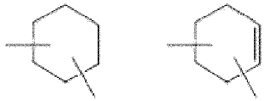

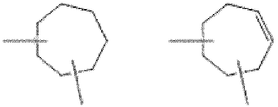

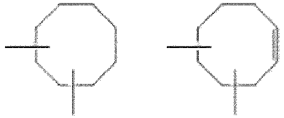

4. Composition de résine photodurcissable selon l'une quelconque des revendications 1 à 3, comprenant en outre un amorceur de photopolymérisation.

5. Encre comprenant la composition de résine photodurcissable selon l'une quelconque des revendications 1 à 4.

6. Matériau de revêtement comprenant la composition de résine photodurcissable selon l'une quelconque des revendications 1 à 4.

7. Matériau de revêtement selon la revendication 6, qui est un vernis de surimpression.
